# EUROPÄISCHE PATENTSCHRIFT

(11) **EP 0 610 844 B1**
(45) Veröffentlichungstag und Bekanntmachung des Hinweises auf die Patenterteilung: **06.08.1997**
(21) Anmeldenummer: 94101796.4
(22) Anmeldetag: 07.02.1994
(51) Int. Cl.: C09D 123/24, C09D 133/02, C09D 133/08

(54) **Verwendung eines Copolymerisats zur Herstellung wässriger Emulsionen**
Use of a copolymerisate to form aqueous emulsions
Utilisation de copolymères pour préparation d'émulsions aqueuses

(30) Priorität: 12.02.1993 DE 4304314
(43) Veröffentlichungstag der Anmeldung: 17.08.1994
(73) Patentinhaber: HOECHST AKTIENGESELLSCHAFT, 65929 Frankfurt am Main (DE)
(72) Erfinder: Hohner, Gerd, Dr., D-86368 Gersthofen (DE); Heinrichs, Franz-Leo, Dr., D-86456 Gablingen (DE); Kainz, Jürgen, D-86356 Neusäss (DE)

(56) Entgegenhaltungen:
- EP-A- 0 129 913
- EP-A- 0 545 306
- DE-A- 4 139 601

## Beschreibung

Die Erfindung bezieht sich auf die Verwendung von Copolymerisaten, welche durch Copolymerisation von langkettigen α-Olefinen mit olefinisch ungesättigten Säuren und Estern sowie gegebenenfalls vinylaromatischen Verbindungen hergestellt wurden, zur Herstellung wässriger Emulsionen.

Wässrige Emulsionen von wachsartigen Stoffen finden vielseitige Verwendung beispielsweise als Pflegemittel für Fußböden, für die Schuh-, Möbel- und Automobilpflege, für die Ausrüstung von Textilien, und als Hydrophobierungsmittel Neben Hilfs- und Zusatzstoffen wie Emulgatoren, und Netzmitteln enthalten solche Emulsionen als wesentliche Wirksubstanz - gegebenenfalls neben hochmolekularen Polymeren - in der Regel polare, meist Carboxylgruppen tragende Wachse. Geeignet sind sowohl vollsynthetische, in der Regel auf Polyethylen basierende Produkte sowie Wachse auf natürlicher Basis. Erstere sind durch Schmelzeoxidation von unpolaren Kohlenwasserstoffwachsen, beispielsweise Polyethylenwachsen (vgl. DE 22 41 057), oder durch oxidativen Abbau von hochmolekularem Polyethylen zugänglich (vgl. DE 20 35 706, DE 14 95 938, EP 296 490). Die Herstellung derartiger Oxidationsprodukte bedingt einen hohen technischen Aufwand, da in einem zweistufigen Verfahren zunächst wachs- oder kunststoffartige Kohlenwasserstoffpolymere hergestellt und diese anschließend oxidativ zu einem für die Emulgierung geeigneten, Carboxylgruppen enthaltenden Produkt abgebaut werden müssen.

Vollsynthetische emulgierbare Wachse sind weiterhin in einstufiger Reaktion durch radikalische Copolymerisation von Olefinkohlenwasserstoffen, üblicherweise Ethylen, mit polaren Comonomeren, z.B. olefinisch ungesättigten Carbonsäuren (vgl. DE 30 44 519) oder auch durch Terpolymerisation mit ungesättigten Säuren und deren Estern (vgl. DE 31 09 950) zugänglich. Der Polymerisationsprozeß erfordert hohe Drucke und Temperaturen und muß in korrosionsfesten Apparaturen durchgeführt werden.

Als Beispiel für emulgierbare Wachse auf natürlicher Basis seien die Montanwachse genannt. Diese werden durch Lösemittelextraktion aus wachsreicher Braunkohle und anschließender Raffination der Extrakte, umfassend Entharzungs-, Bleichungs- und Veresterungsschritte, gewonnen. Der hierzu notwendige technische Aufwand ist beträchtlich.

Es bestand die Aufgabe, emulgierbare, für die obengenannten Anwendungen geeignete Wachse bereitzustellen, die nach einem einfachen, wirtschaftlichen Verfahren hergestellt werden können.

Die für die Herstellung wässiger Emulsionen verwendeten Wachse sind Copolymerisate aus alpha-Olefinen, ungesättigten Carbonsäuren, ungesättigten Carbonsäureestern sowie gegebenenfalls weiteren Comonomeren vom Styroltyp. Derartige Wachse sind bekannt (vgl. DE 41 39 601 entsprechend EP-A-0 545 306 nach Art. 54(3) EPÜ) und bestehen aus 20 bis 99 Gew.-% Einheiten, die sich von C₁₂-C₆₀-α-Olefinen ableiten,
1 bis 30 Gew.-% Einheiten, die sich von einer oder mehreren Carbonsäure(n) der Formel CH₂=CR¹-COOH ableiten,
0 bis 60 Gew.-% Einheiten, die sich von einem oder mehreren Carbonsäureester(n) der Formel CH₂=CR¹-COOR² ableiten,
wobei in diesen Formeln R¹ für ein Wasserstoffatom oder eine Methylgruppe und R² für einen geradkettigen oder verzweigten Alkylrest mit 1 bis 22 C-Atomen stehen, und
0 bis 30 Gew.-% Einheiten, die sich von Styrol, 3-Methylstyrol, 4-Methylstyrol oder α-Methylstyrol ableiten.

Als α-Olefine kommen solche mit einer Kettenlänge von 12 bis 60, bevorzugt von 18 bis 60, besonders bevorzugt von 24 bis 60 C-Atomen in Frage. Es können sowohl kettenreine Olefine als auch Olefingemische eingesetzt werden, wie sie beispielsweise nach bekannten Herstellverfahren als Destillationsschnitte oder Destillationsrückstände anfallen. Technische α-Olefingemische, insbesondere solche mit höherer Kettenlänge, können neben 1-Alkenen mehr oder minder hohe Anteile an innen- oder seitenständigen olefinischen Doppelbindungen (Vinylen- und Vinylidengruppen) enthalten.
Als ungesättigte Carbonsäuren werden erfindungsgemäß Verbindungen der allgemeinen Formel CH₂=CR¹-COOH eingesetzt, worin R¹ ein Wasserstoffatom oder eine Methylgruppe ist, also beispielsweise Acryl- oder Methacrylsäure. Als ungesättigte Carbonsäureester werden Verbindungen der Formel CH₂=CR¹COOR² verwendet, wobei R¹ die obige Bedeutung hat und R² einen geradkettigen oder verzweigten Alkylrest mit 1 bis 22 C-Atomen, **vorzugsweise von 1 bis 18 C-Atomen,** bedeutet. Bevorzugt sind die Methyl- und Ethylester der Acryl- und Methacrylsäure, besonders bevorzugt ist der Methylester der Acrylsäure.
Als vinylaromatische Verbindungen können Styrol, 3-Methylstyrol, 4-Methylstyrol oder α-Methylstyrol, bevorzugt Styrol eingesetzt werden. Möglich ist auch die Verwendung mehrerer der genannten Carbonsäuren, Carbonsäureester und gegebenenfalls Styrolen.

Die Herstellung der erfindungsgemäß zu verwendenden Wachse geschieht durch Umsetzung der Ausgangsmonomeren unter katalytischer Einwirkung geringer Mengen organischer Peroxide.

Die Copolymeren werden zur Herstellung wässriger Emulsionen verwendet. Die Emulsionen werden in bekannter Weise durch Verrühren der Copolymerisate mit Wasser bei Temperaturen oberhalb des Wachsschmelzpunkts hergestellt. Die Emulsionen können drucklos, im Niederdruck-Autoklaven oder mittels einer Hochdruck-Homogenisiermaschine bereitet werden. Die gebräuchlichen Herstellungsverfahren sind die folgenden:

Bei der ersten Methode des "Wasser-in-Wachs-Verfahrens" werden das Copolymer und die eventuell mitzuemulgierenden Stoffe in einem mit Dampf beheizten Behälter aufgeschmolzen. Bei etwa 110°C werden die Emulgatoren oder Verseifungsmittel zugegeben. Kationische Emulgatoren werden vorher mit der notwendigen Säuremenge neutralisiert. Die günstigste Temperatur für das Verseifen und Emulgieren ist von der jeweiligen Rezeptur abhängig und muß in Versuchen ermittelt werden. In die Schmelze wird nach und nach siedendes Wasser in so kleinen Mengen eingerührt, daß der bei der Emulgierung entstehende Dampf restlos vom Kondensator niedergeschlagen werden kann. Anschließend wird der Ansatz gekühlt und filtriert.

Bei der zweiten Methode des "Wasser-in-Wachs-Verfahrens" werden die Rohstoffe wie vorstehend für das Emulgieren vorbereitet. Danach wird die dem Wachs-Emulgator-Gemisch entsprechende Gewichtsmenge siedendes Wasser möglichst auf einmal zugegeben, so daß sich eine ca. 50%ige konzentrierte Emulsion bildet. Der Inhalt des Behälters wird auf 85 bis 90°C abgekühlt und unter Rühren mit dem restlichen Wasser verdünnt.

Beim "Wachs-in-Wasser-Verfahren" werden Wachse und Emulgatoren in einem Schmelzbehälter auf ca. 120 bis 130°C erhitzt. In einem zweiten Behälter wird die vorgesehene Wassermenge auf die Emulgiertemperatur erwärmt. Die Wachsschmelze wird dann in dünnem Strahl in das vorgelegte Wasser eingerührt.Nach beendeter Wachszugabe wird die Emulsion auf Raumtemperatur abgekühlt und filtriert.

Für das Emulgieren in einem Niederdruck-Autoklaven werden alle Rohstoffe bei Raumtemperatur in das Druckgefäß eingefüllt und dieses verschlossen. Danach wird der Gefäßinhalt auf die für das jeweilige Rezept vorgesehene Temperatur erhitzt und ca. 45 min unter Rühren erhitzt.

Schließlich ist auch das Emulgieren mittels einer Hochdruck-Homogenisiermaschine möglich. Dazu wird in einem vorgeschalteten Rührbehälter das Wasser erhitzt, sämtliche Bestandteile der herzustellenden Emulsion zugegeben und das Ganze intensiv vermischt und in die Homogenisiermaschine gepumpt. Der Druck beträgt etwa 50 bis 100 bar. Die aus der Homogenisiermaschine austretende Emulsion wird kontinuierlich auf Raumtemperatur abgekühlt und filtriert.

Gegenstand der Erfindung sind somit auch wäßrige Emulsionen, enthaltend 1 bis 35 Gew.-% eines Copolymerisats bestehend aus 20 bis 99 Gew.-% Einheiten, die sich von mindestens einem C₁₂-C₆₀-α-Olefin ableiten,
1 bis 30 Gew.-% Einheiten, die sich von mindestens einer Carbonsäure der Formel CH₂=CR¹-COOH ableiten,
0 bis 60 Gew.-% Einheiten, die sich von mindestens einem Carbonsäureester der Formel CH₂=CR¹-COOR² ableiten,
wobei in diesen Formeln R¹ für ein Wasserstoffatom oder eine Methylgruppe und R² für einen geradkettigen oder verzweigten Alkylrest mit 1 bis 22 C-Atomen stehen, und
0 bis 30 Gew.-% Einheiten, die sich von Styrol, 3-Methylstyrol, 4-Methylstyrol oder α-Methylstyrol ableiten, 1 bis 30 Gew.-% eines Emulgators und 50 bis 98 Gew.-% Wasser.

Neben dem Copolymerisat enthalten die Emulsionen die üblichen Hilfsstoffe wie beispielsweise ionogene und/oder nichtionogene Emulgatoren, zusätzlich andere Wachse, Paraffine. Weiterhin können zur Optimierung der anwendungstechnischen Eigenschaften andere übliche Komponenten wie beispielsweise Lösemittel, wie beispielsweise Isopropanol, Testbenzin in Mengen bis 95 Gew.-%,
Verlaufs- und Netzmittel, wie beispielsweise modifizierte Maleinatharze in Mengen von 5 bis 15 Gew.-%,
Polymerdispersionen, wie beispielsweise metallsalzhaltige oder metallsalzfreie Acrylat- oder Acrylat-Styrol-Copolymerdispersionen in Mengen von 10 bis 90 Gew.-%,
Entschäumer, wie beispielsweise Polysiloxan-Polyether-Copolymere oder Siliconöle in Mengen bis 0,03 Gew.-%,
Filmbildehilfsmittel (filmbildende Zusätze), wie beispielsweise Fluortenside in Mengen bis 0,05 Gew.-%,
Antistatika, wie beispielsweise organische Phosphorsäureester in Mengen bis 0,7 Gew.-%, Bakterizide,
Konservierungsmittel, beispielsweise 1,2-Benzisothiazolin-3-on in Mengen bis 0,3 Gew.-%,
Farbstoffe, wie beispielsweise Fluorescein in Mengen bis ca. 0,03 Gew.-%, Duftstoffe, wie beispielsweise Citronenöl oder Orangenterpen in Mengen bis 0,7 Gew.-%,
Korrosionsinhibitoren, wie beispielsweise stickstoffhaltige Borsäurederivate, in Mengen bis 8 Gew.-%, zugemischt werden.

Vorteilhaft ist, daß die Emulgierung aufgrund der niedrigen Schmelzpunkte der Copolymerwachse bei einer Temperatur unterhalb 100°C ohne Anwendung von Druck erfolgen kann.

Die Emulsionen eignen sich beispielsweise als Pflegemittel für Fußböden, Automobile, Möbel und Leder sowie zur Hydrophobierung, zur Ausrüstung von Textilien, zum Beschichten von Glas, zur antikorrosiven Konservierung beispielsweise von Automobilen, als Fassadenschutz und zur Betonversiegelung.

Die nachfolgenden Beispiele sollen die Erfindung erläutern.

### Beispiele 1 bis 10

Die für die Zubereitung der erfindungsgemäßen Emulsionen eingesetzten, in Tabelle 1 aufgeführten Copolymerwachse wurden entsprechend der folgenden Vorschrift hergestellt:

In einem mit Thermometer, Rührer, Tropftrichter und Rückflußkühler ausgestattetem Fünfhalskolben wurden 500 g eines handelsüblichen C₂₄-C₆₀-α-Olefin-Schnittes vorgelegt und auf 140°C erhitzt. Bei dieser Temperatur tropfte man unter Rühren innerhalb von 5 Stunden eine Mischung aus Methylacrylat, Acrylsäure und 5,0 g Di-t-butylperoxid (für Copolymerwachse 1 bis 5, 8 und 9) oder eine Mischung aus Methylcrylat, Acrylsäure, Methylmethacrylat und 5,0 g Di-t-butylperoxid (Copolymerwachs 6) oder eine Mischung aus Methylacrylat, Acrylsäure, Styrol und 5,0 g Di-t-butylperoxid (Copolymerwachs 7) oder eine Mischung aus Acrylsäure und 5,0 g Di-t-butylperoxid (Copolymerwachs 10) zu. Nach beendetem Zutropfen ließ man das Gemisch noch 30 min nachreagieren und destillierte flüchtige Bestandteile im Vakuum bei 15 mbar und 170°C Badtemperatur ab. Das farblose, wachsartig erstarrende Reaktionsprodukt wurde in Schalen ausgegossen. Die Zusammensetzung der Wachse und die physikalischen Daten sind in Tabelle 1 aufgeführt.

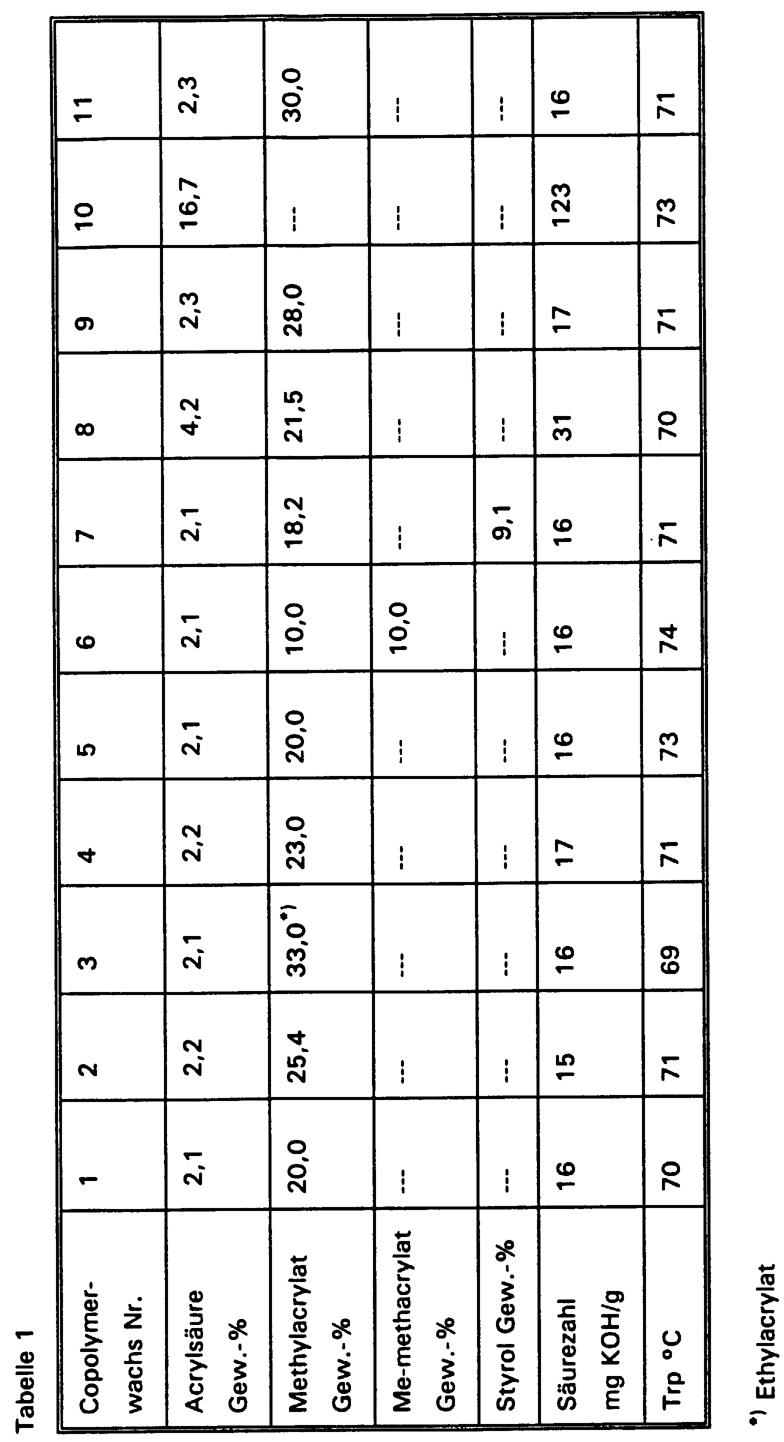

Säurezahlen bzw. Tropfpunkte wurden nach den DGF-Einheitsmethoden M-IV 2 (57) bzw. M-III 3 (75) bestimmt (Normen der Deutschen Gesellschaft für Fettwissenschaft e.V.).

Die vorstehend aufgeführten Copolymerwachse wurden unter Verwendung der in Tabelle 2 angegebenen Rezepturen nach folgender Arbeitsweise emulgiert:

In eine Schmelze des Wachses wurden bei ca. 120°C Emulgator und KOH eingerührt, die Mischung wurde in dünnem Strahl unter Rühren in heißes Wasser (85°C) gegossen und anschließend im Wasserbad rasch auf Raumtemperatur abgekühlt. In den Beispielen 9 und 11 wurde der Emulgator vor dem Einrühren in die Wachsschmelze mit der angegebenen Menge Eisessig neutralisiert.

Im Beispiel 8 wurden Wachs und Emulgator bei 105°C geschmolzen, portionsweise siedendes Wasser zugesetzt, der Ansatz aufgekocht und im Wasserbad unter Rühren abgekühlt.

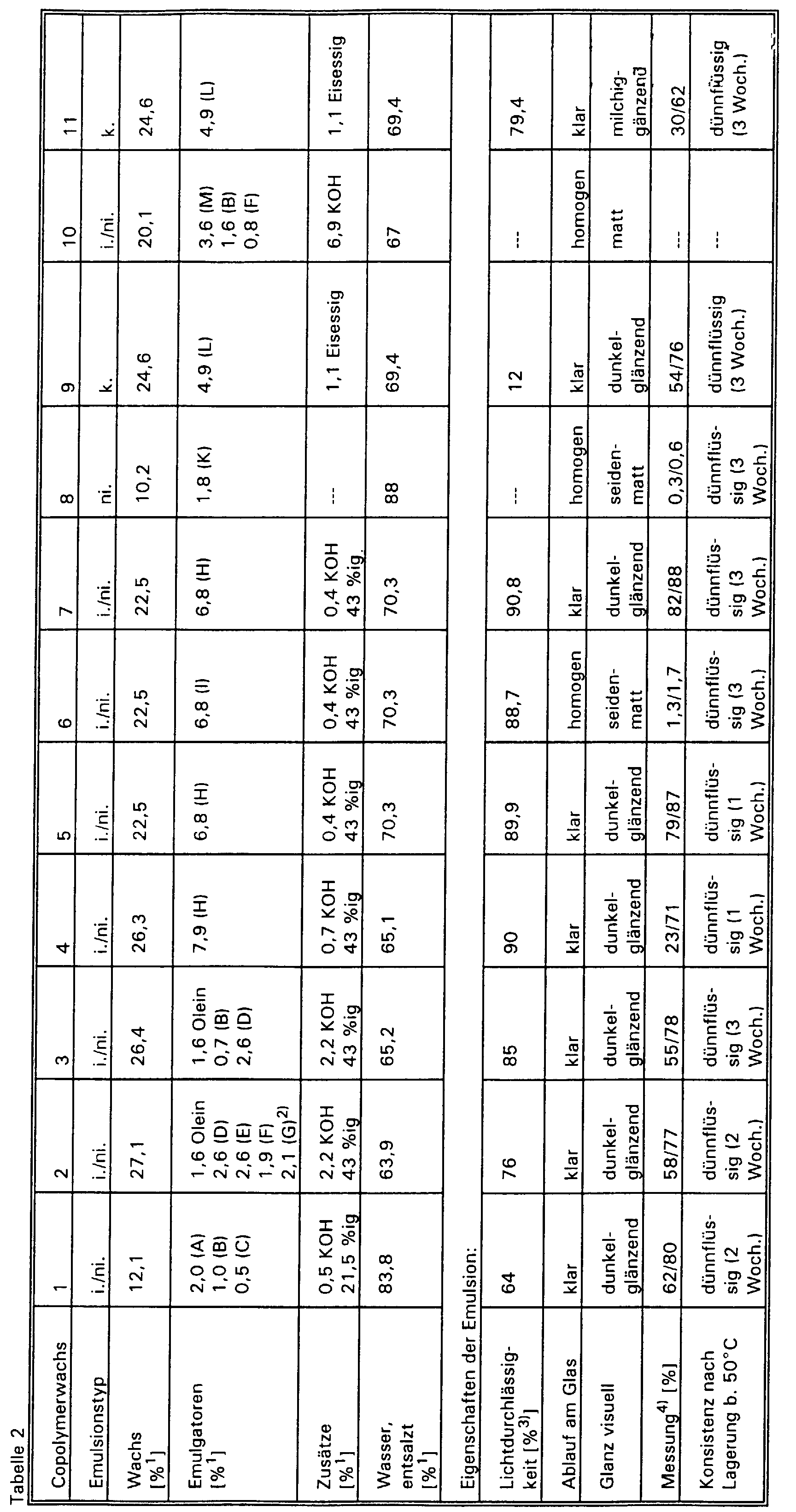

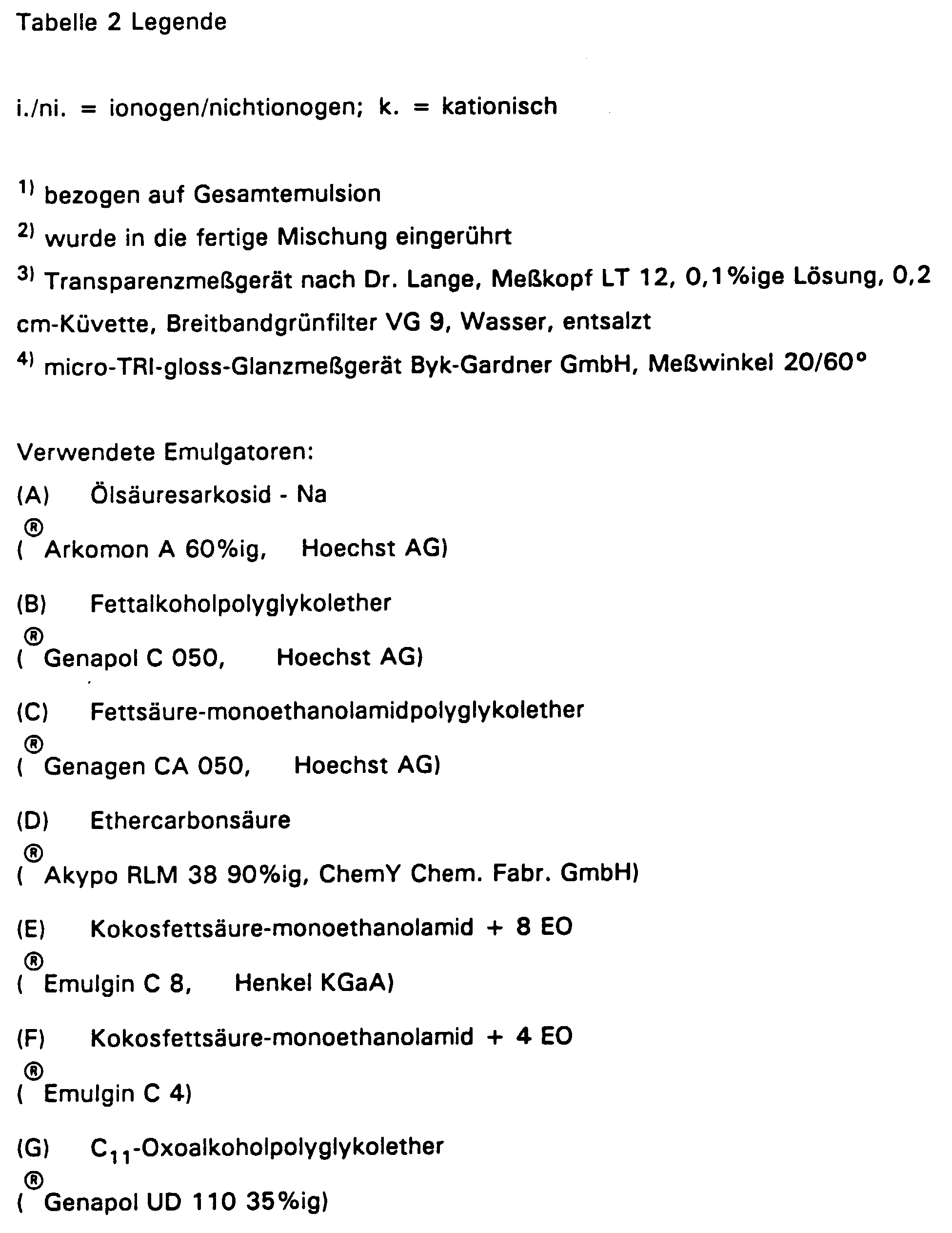

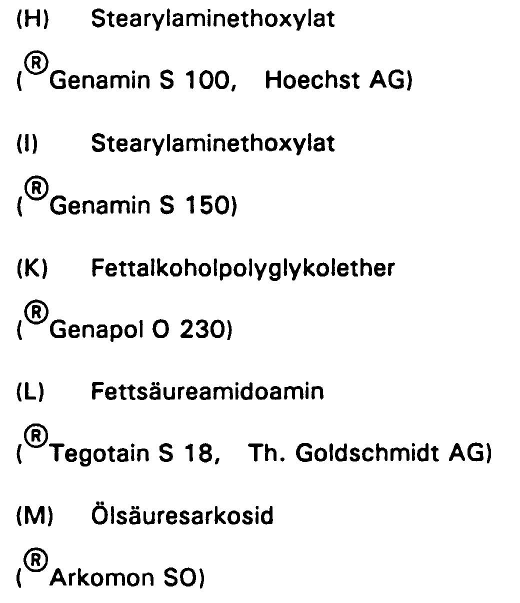

### Beispiel 12

### Herstellung einer Selbstglanzemulsion

70 Teile der in Tabelle 2 unter Versuchsnummer 5 aufgeführten Emulsion wurden mit 30 Teilen einer handelsüblichen Acrylat-Copolymerdispersion (®Licomer A 53, 15%ig, Hoechst AG), 1,5 Teilen Ethyldiglykol, 0,5 Teilen Tributoxyethylphosphat, 1.0 Teilen Fluortensid (®Licowet F1 (1 %ig), Hoechst AG) und 0,1 Teilen einer Mischung aus Methylchlorisothiazolinon und Methylisothiazolinon (®Mergal K 7, Riedel de Haen AG) abgemischt. Die resultierende Selbstglanzemulsion war stabil und zeigte beim Auftrag auf Fußbodenbeläge hervorragenden Selbstglanz bei guter Detergentien- und Wasserbeständigkeit und war bei Anwendung von Reinigern gut zu entfernen. Die Filme waren rutschfest und nahmen nur wenig Schmutz auf.

### Beispiel 13

### Herstellung einer Selbstglanzemulsion

7,8 Teile der in Tabelle 2 unter Versuchsnummer 5 aufgeführten Emulsion wurden mit 37,4 Teilen einer handelsüblichen metallsalzhaltigen Polymerdispersion (® Licomer M 55, 38%ig, Hoechst AG), 4,3 Teilen Tributoxyethylphosphat, 5,0 Teilen modifiziertem Maleinatharz (®Alresat 640 C, 20%ig, Hoechst AG), 1,0 Teil Oxoalkoholpolyglykolether (®Genapol OX 060, Hoechst AG), 1,0 Teilen Fluortensid (® Licowet F1, 1 %ig, Hoechst AG), 0,1 Teilen Ammoniaklösung (25%ig) und 43,3 Teilen entsalztem Wasser abgemischt. Die resultierende Selbstglanzemulsion war stabil und klar homogen und zeigte beim Auftrag auf Fußbodenbeläge hervorragenden Selbstglanz bei guter Detergentien- und Wasserbeständigkeit und war bei Anwendung von Reinigern gut zu entfernen. Die Filme waren rutschfest und nahmen nur wenig Schmutz auf.

### Beispiel 14

### Herstellung einer Möbelpolitur

47,0 Teile der in Tabelle 2 unter Nr. 11 aufgeführten Emulsion wurden mit 66,0 Teilen Wasser verdünnt und anschließend mit 30,0 Teilen Testbenzin, 2,5 Teilen eines handelsüblichen Alkylpolyglykolethers (®Emulsogen LP, Hoechst AG), 0,5 Teilen eines handelsüblichen organischen Phosphorsäureesters (®Hostphat KL 340 N, Hoechst AG) und 20,0 Teilen einer handelsüblichen Siliconemulsion (E 10, Wacker Chemie GmbH) gemischt und die Mischung eine Stunde gerührt. Die resultierende Emulsion zeigte, auf eine Möbeloberfläche aufgetragen, gute Polierbarkeit und guten Glanz.

### Beispiel 15

### Herstellung einer lösemittelfreien Autopolitur

5,5 Teile des in Tabelle 1 unter Nr. 11 aufgeführten Copolymerwachses wurden zusammen mit 0,5 Teilen technischer Stearinsäure, 1,1 Teilen eines handelsüblichen Fettsäureamidoamin-Emulgators (®Tegotain S 18, Th. Goldschmidt AG), 4,0 Teilen Siliconöl AK 350, 0,5 Teilen Silconöl AK 12500 und 1,0 Teilen Siliconöl L 654 (alle von Wacker Chemie GmbH), sowie 20,0 Teilen n-Paraffin C₁₀-C₁₃ auf 80°C erwärmt. In die Mischung wurden 0,5 Teile Eisessig eingerührt. Anschließend ließ man den Ansatz auf Raumtemperatur abkühlen und rührte eine Mischung aus 0,5 Teilen Aluminiumsilikat (®Kaopolite SF, Gesellschaft für Rohstoffveredlung mbH), 0,5 Teilen technischem Glycerin und 64,0 Teile Wasser ein. Die stabile, dickflüssige Politur zeigte nach Auftrag auf Autoblech gute Polierbarkeit und guten Glanz.

## Patentansprüche

1. Verwendung eines Copolymerisats bestehend aus
20 bis 99 Gew.-% Einheiten, die sich von mindestens einem C₁₂-C₆₀-α-Olefin ableiten,
1 bis 30 Gew.-% Einheiten, die sich von mindestens einer Carbonsäure der Formel CH₂=CR¹-COOH ableiten,
0 bis 60 Gew.-% Einheiten, die sich von mindestens einem Carbonsäureester der Formel CH₂=CR¹-COOR² ableiten,
wobei in diesen Formeln R¹ für ein Wasserstoffatom oder eine Methylgruppe und R² für einen geradkettigen oder verzweigten Alkylrest mit 1 bis 22 C-Atomen stehen, und
0 bis 30 Gew.-% Einheiten, die sich von Styrol, 3-Methylstyrol, 4-Methylstyrol oder α-Methylstyrol ableiten zur Herstellung wässriger Emulsionen.

2. Verwendung nach Anspruch 1, dadurch gekennzeichnet, daß das Copolymerisat Einheiten von mindestens einem C₁₈-C₆₀-Olefin enthält.

3. Verwendung nach Anspruch 1, dadurch gekennzeichnet, daß das Copolymerisat Einheiten von mindestens einem C₂₄-C₆₀-Olefin enthält.

4. Verwendung nach Anspruch 1, dadurch gekennzeichnet, daß das Copolymerisat Einheiten von mindestens einem Carbonsäureester der Formel CH₂=CR¹-COOR², in dessen Formel R¹ ein Wasserstoffatom oder eine Methylgruppe und R² eine geradkettige oder verzweigte Alkylgruppe mit 1 bis 18 C-Atomen ist, enthält.

5. Wässrige Emulsion enthaltend
1 bis 35 Gew.-% eines Copolymerisats bestehend aus
20 bis 99 Gew.-% Einheiten, die sich von mindestens einem C₁₂-C₆₀-α-Olefin ableiten,
ableiten,
1 bis 30 Gew.-% Einheiten, die sich von mindestens einer Carbonsäure der Formel CH₂=CR¹-COOH ableiten,
0 bis 60 Gew.-% Einheiten, die sich von mindestens einem Carbonsäureester der Formel CH₂=CR¹-COOR² ableiten,
wobei in diesen Formeln R¹ für ein Wasserstoffatom oder eine Methylgruppe und R² für einen geradkettigen oder verzweigten Alkylrest mit 1 bis 22 C-Atomen stehen, und
0 bis 30 Gew.-% Einheiten, die sich von Styrol, 3-Methylstyrol, 4-Methylstyrol oder α-Methylstyrol ableiten,
1 bis 30 Gew.-% eines Emulgators und
50 bis 98 Gew.-% Wasser.

6. Wässrige Emulsion gemäß Anspruch 5 enthaltend zusätzlich andere Wachse, Paraffine, Lösemittel, Netz- und Verlaufsmittel, Polymerdispersionen, Entschäumer, Filmbildehilfsmittel (filmbildende Zusätze), Antistatika, Bakterizide, Konservierungsmittel, Farb- und Duftstoffe und Korrosionsinhibitoren.

7. Verwendung der Emulsion gemäß Anspruch 5 als Pflegemittel für Fußböden, Automobile, Möbel und Leder.

## Claims

1. The use of a copolymer consisting of
20 to 99% by weight of units which are derived from at least one C₁₂-C₆₀-α-olefin,
1 to 30% by weight of units which are derived from at least one carboxylic acid of the formula CH₂=CR¹-COOH,
0 to 60% by weight of units which are derived from at least one carboxylic acid ester of the formula CH₂=CR¹-COOR²,
in which, in these formulae, R¹ is a hydrogen atom or a methyl group and R² is a straight-chain or branched alkyl radical having 1 to 22 carbon atoms, and
0 to 30% by weight of units which are derived from styrene, 3-methylstyrene, 4-methylstyrene or α-methylstyrene
for the preparation of an aqueous emulsion.

2. The use as claimed in claim 1, wherein the copolymer comprises units of at least one C₁₈-C₆₀-olefin.

3. The use as claimed in claim 1, wherein the copolymer comprises units of at least one C₂₄-C₆₀-olefin.

4. The use as claimed in claim 1, wherein the copolymer comprises units of at least one carboxylic acid ester of the formula CH₂=CR¹-COOR², in the formula of which R¹ is a hydrogen atom or a methyl group and R² is a straight-chain or branched alkyl group having 1 to 18 carbon atoms.

5. An aqueous emulsion consisting of
1 to 35% by weight of a copolymer comprising
20 to 99% by weight of units which are derived from at least one C₁₂-C₆₀-α-olefin,
1 to 30% by weight of units which are derived from at least one carboxylic acid of the formula CH₂=CR¹-COOH,
0 to 60% by weight of units which are derived from at least one carboxylic acid ester of the formula CH₂=CR¹-COOR²,
in which, in these formulae, R¹ is a hydrogen atom or a methyl group and R² is a straight-chain or branched alkyl radical having 1 to 22 carbon atoms, and
0 to 30% by weight of units which are derived from styrene, 3-methylstyrene, 4-methylstyrene or α-methylstyrene,
1 to 30% by weight of an emulsifier and
50 to 98% by weight of water.

6. An aqueous emulsion as claimed in claim 5 additionally comprising other waxes, paraffins, solvents, wetting and flow control agents, polymer dispersions, foam suppressants, film-forming auxiliaries (film-forming additives), antistatics, bactericides, preservatives, colorants and fragrances, and corrosion inhibitors.

7. The use of an emulsion as claimed in claim 5 as a care agent for flooring, automobiles, furniture and leather.

## Revendications

1. Utilisation d'un copolymère composé
de 20 à 99 % en poids de motifs dérivant d'au moins une α-oléfine en C₁₂-C₆₀,
de 1 à 30 % en poids de motifs dérivant d'au moins un acide carboxylique de formule CH₂=CR¹-COOH,
de 0 à 60 % en poids de motifs dérivant d'au moins un ester d'acides carboxyliques de formule CH₂=CR¹-COOR²,
dans ces formules R¹ étant un atome d'hydrogène ou un groupe méthyle et R² un radical alkyle linéaire ou ramifié avec 1 à 22 atomes de carbone, et
de 0 à 30 % en poids de motifs dérivant du styrène, du 3-méthylstyrène, du 4-méthylstyrène, ou de l'α-méthyl-styrène, pour la préparation d'émultions aqueuses.

2. Utilisation selon la revendication 1, caractérisée en ce que le copolymère comporte des motifs d'au moins une oléfine en C₁₈-C₆₀.

3. Utilisation selon la revendication 1, caractérisée en ce que le copolymère comporte des motifs d'au moins une oléfine en C₂₄-C₆₀.

4. Utilisation selon la revendication 1, caractérisée en ce que le copolymère comporte des motifs d'au moins un ester d'acide carboxylique de formule CH₂=CR¹-COOR², dans cette formule R¹ représente un atome d'hydrogène ou un groupe méthyle et R² un radical alkyle linéaire ou ramifié avec 1 à 18 atomes de carbone.

5. Emulsion aqueuse contenant
de 1 à 35 % en poids d'un copolymère constitué de
de 20 à 99 % en poids de motifs dérivant d'au moins une *α*-oléfine en C₁₂-C₆₀,
de 1 à 30 % en poids de motifs dérivant d'au moins un acide carboxylique de formule CH₂=CR¹-COOH,
de 0 à 60 % en poids de motifs dérivant d'au moins un ester d'acide carboxylique de formule CH₂=CR¹-COOR²,
dans ces formules R¹ étant un atome d'hydrogène ou un groupe méthyle et R² un radical alkyle linéaire ou ramifié avec 1 à 22 atomes de carbone, et
de 0 à 30 % en poids de motifs dérivant du styrène, du 3-méthylstyrène, du 4-méthylstyrène, ou de l'α-méthylstyrène,
de 1 à 30 % en poids d'un émulsionnant et
de 50 à 98 % en poids d'eau.

6. Emulsion aqueuse selon la revendication 5, contenant en plus d'autres cires, paraffines, solvants, agents mouillants et égalisants, dispersions polymères, agents antimousse, agents filmogènes (additifs filmogènes), antistatiques, bactéricides, agents de conservation, colorants et parfums, et inhibiteurs de corrosion.

7. Utilisation de l'émulsion selon la revendication 5 comme produit d'entretien de revêtements de sol, d'automobile, de meubles et de cuir.
